# EUROPÄISCHE PATENTANMELDUNG

(11) **EP 3 269 230 A1**
(43) Veröffentlichungstag der Anmeldung: **17.01.2018**
(21) Anmeldenummer: 17179512.3
(22) Anmeldetag: 04.07.2017
(51) Int. Cl.: A01F 25/13, A01F 25/16

(54) **FOLIENWICKELEINRICHTUNG FÜR EINEN FAHRSILO**

(30) Priorität: 14.07.2016 AT 506312016
(71) Anmelder: Wasserbauer GmbH, 4595 Waldneukirchen (AT)
(72) Erfinder: Wasserbauer, Franz, 4595 Waldneukirchen (AT)
(74) Vertreter: KLIMENT & HENHAPEL

(57) **Zusammenfassung**

Um Folien (17) zur Abdeckung eines Fahrsilos (15) effizient und einfach aufrollen zu können, wird erfindungsgemäß eine Folienwickeleinrichtung (1) für einen Fahrsilo (15) zum Aufwickeln einer Folie (17), vorzugsweise einer Siloabdeckfolie, die eine Mehrzahl von über zumindest einen Antrieb antreibbaren Wickelelementen (2) umfasst vorgeschlagen, wobei jeweils zwei benachbarte Wickelemente (2) schwenkbar gelenkig miteinander verbunden sind.

## Beschreibung

### GEBIET DER ERFINDUNG

Die Erfindung betrifft eine Folienwickeleinrichtung für einen Fahrsilo zum Aufwickeln einer Folie, vorzugsweise einer Siloabdeckfolie.

### STAND DER TECHNIK

Fahrsilos werden in der Regel in der Landwirtschaft eingesetzt um Futtermittel, beispielsweise Grünfuttermittel wie Gras, Mais oder Klee zu lagern und durch Gärung zu konservieren. Fahrsilos bestehen dabei in der Regel aus einer vorzugsweise betonierten Rinne, deren Abmessungen derart gewählt sind, dass Nutzfahrzeuge, insbesondere landwirtschaftliche Nutzfahrzeuge wie Traktoren, den Fahrsilo befahren können, um Futtermittel in den Fahrsilo eintragen oder Futtermittel aus dem Fahrsilo austragen zu können.

Das Futtermittel ist dabei üblicher Weise in der Rinne aufgeschüttet und bildet keine ebene Oberfläche, sondern eine Art Schüttkegel aus. Um das Futtermittel vor Umwelteinflüssen wie Wind oder Regen zu schützen, ist das Futtermittel im Fahrsilo von einer Plane, vorzugsweise einer Siloabdeckplane, oder auch mehrerer Planen abgedeckt, die zudem mit einem Netz überspannt sein können, um die Planen vor einer Beschädigung durch Vögel zu schützen. Diese Plane dient auch zur luftdichten Versiegelung des Futtermittels, um den Gärprozess zu ermöglichen. Um die Folie zu befestigen, ist es nach dem Stand der Technik bekannt, diese mit sowohl seitlich als auch über die Oberfläche, beispielsweise zeilenförmig verteilt angeordneten Sandsäcken zu beschweren.

Um Futtermittel aus dem Fahrsilo entnehmen zu können, müssen zuerst alle Sandsäcke in dem freizulegenden Abschnitt des Fahrsilos entfernt werden. Danach wird die Folie abschnittsweise in Richtung des gelagerten, nicht freizulegenden Futtermittels manuell umgeschlagen oder aufgerollt um Futtermittel freizulegen. Für diesen Vorgang ist in der Regel, je nach Breite des Fahrsilos, die Hilfe einer zweiten Person notwendig, wobei mitunter auch auf den Schüttkegel geklettert werden muss.

Da sich dieser Vorgang äußert arbeitsaufwändig gestaltet und eine mitunter große Zeitdauer für das Umschlagen bzw. Aufwickeln der Folie notwendig ist, wird in der Regel ein größerer Abschnitt des Futtermittels freigelegt, als auf einmal entnommen werden soll. Der verbleibende freigelegte Abschnitt des Futtermittels wird nach der erfolgten Entnahme im Allgemeinen aufgrund des hohen Aufwands nicht wieder abgedeckt und ist demensprechend nicht mehr vor Witterungseinflüssen geschützt. Zudem wird auf eine gute Abdichtung des Randbereiches mithilfe entsprechend nachgeschlichteter Sandsäcke nicht immer geachtet, wodurch die Qualität des Futtermittels leidet.

### AUFGABE DER ERFINDUNG

Es ist daher eine Aufgabe der Erfindung die Nachteile des Stands der Technik zu überwinden und eine Folienwickeleinrichtung vorzuschlagen, mittels derer die Folie aufgewickelt bzw. abgewickelt werden kann. Der Vorgang des Aufwickelns soll dadurch erleichtert und stets eine gute Abdichtung insbesondere des Randbereiches des abgedeckten Futtermittels erreicht werden.

### DARSTELLUNG DER ERFINDUNG

Diese Aufgabe wird erfindungsgemäß gelöst durch eine Folienwickeleinrichtung für einen Fahrsilo zum Aufwickeln einer Folie, vorzugsweise einer Siloabdeckfolie, bei der eine Mehrzahl von in einer Längsrichtung angeordneten Wickelelementen mit zumindest einem Antrieb für den Wickelvorgang vorgesehen ist, wobei jeweils zwei benachbarte Wickelelemente schwenkbar gelenkig miteinander verbunden sind. Ein Wickelelement dient dem Aufwickeln der Folie und kann auf unterschiedliche Weise ausgeführt werden, wie noch näher ausgeführt werden wird. Der Aufbau der Folienwickeleinrichtung als einer Aneinanderreihung von einzelnen, gelenkig miteinander verbundenen Wickelelementen hat jedoch mehrere Vorteile. Da die einzelnen Wickelemente schwenkbar aneinander angebunden sind, passt sich die Folienwickeleinrichtung dem Querschnitt der Schüttung an, der wie erwähnt uneben ist und zumeist eine Wölbung ausbildet. Die gelenkige Anbindung der einzelnen Wickelemente aneinander ermöglicht es, dass die Folienwickeleinrichtung beispielsweise einer Bogen- oder Muldenform folgen kann, sodass ein guter Kontakt der einzelnen Wickelelemente mit der Folie sichergestellt ist. In anderen Worten ist die Folienwickeleinrichtung gelenkkettenartig ausgebildet, sodass sich die einzelnen Wickelelemente nach Art einer Gelenkkette dem Verlauf der Plane anpassen können. Es sei dabei auch darauf hingewiesen, dass die Länge der Folienwickeleinrichtung über die Anzahl der Wickelelemente veränderbar ist, sodass die Folienwickeleinrichtung für beliebig große Fahrsilos verwendet werden kann, indem die Anzahl der Wickelelemente entsprechend variiert wird. Die Folienwickeleinrichtung kann dabei zum Aufwickeln einer einzelnen Folie, einer Anordnung mehrerer aufeinander liegender Folien, oder auch einer Anordnung mehrerer, mit einem Netz überspannten Folien verwendet werden.

Da die Wickelemente über zumindest einen Antrieb, beispielsweise einen oder mehrere Elektromotoren, antreibbar sind, kann die Folienwickeleinrichtung von einer einzelnen Person etwa per Funkfernsteuerung in Betrieb genommen werden. Die Wickelelemente wickeln dabei die Folie auf, wobei die Wickelelemente zunächst noch ruhen, bis die Folie so stark angepresst wird, dass sich die Wickelelemente selbst weiterbewegen. Der Antrieb für den Wickelvorgang wickelt somit nicht nur die Folie auf, sondern bewegt die Folienwickeleinrichtung auch senkrecht zu ihrer Längserstreckung weiter. Über eine Funkfernbedienung beispielsweise kann die Bedienperson somit je nach Betätigungsdauer des zumindest einen Antriebes gewünschte Abschnitte des Futtermittels freilegen, indem die Folienwickeleinrichtung entlang dieses Abschnittes bewegt wird und dabei die Folie aufwickelt.

Beispielsweise wäre es dabei denkbar, dass jede Wickeleinheit über einen eigenen Antrieb verfügt. In einer bevorzugten Ausführungsvariante der Erfindung ist jedoch vorgesehen, dass zumindest zwei benachbarte Wickelelemente über jeweils eine Gelenkkupplung zur Weiterleitung eines Antriebsmoments miteinander verbunden sind. Somit ist es nicht notwendig jedes Wickelelement mit einem eigenen Antrieb zu versehen, da das Antriebsmoment eines Antriebs für den Antrieb mehrerer Wickelelemente nutzbar ist. Beispielsweise ist es denkbar, dass alle Wickelelemente über jeweils eine Gelenkkupplung miteinander verbunden sind, sodass ein einzelner Antrieb für den Betrieb aller Wickelelemente ausreicht. Durch die Gelenkkupplung ist die Weiterleitung des Drehmoments auch sichergestellt, wenn zwei benachbarte Wickelelemente gegeneinander verschwenkt sind. Als Gelenkkupplung sind dabei beispielsweise kardanische Gelenke, flexible Gelenke oder Bogenzahnkupplungen denkbar.

Um die Folie in einfacher Art und Weise aufwickeln zu können, sieht eine weitere Ausführungsvariante der Erfindung vor, dass die Wickelemente jeweils zumindest ein um zumindest zwei Wellenachsen umlaufendes Umlauffördermittel, vorzugsweise ein Riemen oder ein Band, zum kontinuierlichen Aufwickeln der Folie aufweisen. Umlauffördermittel wie Ketten, Riemen, Gurte oder Bänder, die zwischen zwei oder mehr Wellen gespannt sind, eignen sich besonders gut zum Aufwickeln der Folie. Insbesondere wenn das Umlauffördermittel aus einem Kunststoff besteht, kann ein reibschlüssiger Kontakt zwischen Umlauffördermittel und Folie sichergestellt werden, der das Aufwickeln ermöglicht. Dabei können ein, zwei, drei, vier oder sogar mehr Umlauffördermittel zwischen den Wellen gespannt sein. Es ist auch denkbar, dass die Umlauffördermittel zwischen drei Wellen gespannt sind, deren Wellenachsen in Form eines Dreiecks angeordnet sind.

Um die Umlauffördermittel mit geringem konstruktiven Aufwand über den zumindest einen Antrieb antreiben zu können, ist in einer bevorzugten Ausführungsvariante der Erfindung des Weiteren vorgesehen, dass zumindest zwei Wellen mit den Wellenachsen des Umlauffördermittels vorgesehen sind, wobei zumindest eine der Wellen als Antriebswelle ausgebildet ist und über eine Gelenkkupplung mit der Antriebswelle eines benachbarten Wickelements verbunden ist. Die zweite Welle oder weitere Wellen des benachbarten Wickelelements werden in weiterer Folge über das Umlauffördermittel indirekt angetrieben. Somit ist zwischen zwei benachbarten Wickelelementen lediglich eine Gelenkkupplung notwendig, um das Antriebsmoment weiterleiten zu können, und die über Gelenkkupplungen zusammengeschlossenen Wickelelemente über einen gemeinsamen Antrieb antreiben zu können.

Das Umlauffördermittel kann dabei über ein Treibelement, wie eine Riemenscheibe oder dergleichen, angetrieben werden. Treibelemente können beispielsweise durch Reibschluss, wie bei einer Riemenscheibe oder einem Förderrad, oder durch Kraftschluss, wie bei Zahnrädern oder Kettenrädern, die Umlauffördermittel antreiben. Ist eine der Wellen als Antriebswelle ausgebildet und zumindest eine der Wellen als angetriebene Welle ausgebildet, so ist das auf der Antriebswelle angeordnete Treibelement als Antriebs-Treibelement und das auf der angetriebenen Welle angeordnete Treibelement als angetriebenes Treibelement ausgebildet. Vorzugsweise sind alle Treibelemente gleichartig ausgebildet, um einen im Wesentlichen ebenen Verlauf der Umlauffördermittel zwischen den Wellen zu ermöglichen.

Vorzugsweise sind des Weiteren zwischen zwei benachbarten Wickelelementen Anpressrollen drehbar angeordnet. Die Anpressrollen dienen der Beschwerung der Folie und somit zur besseren Abdichtung zusätzlich zu den Wickelelementen.. Die Anpressrollen können sich dabei vorzugsweise in ihrer Höhenlage relativ zu den Wickelelementen geringfügig bewegen, sodass sie in Gebrauchslage auf der Folie aufliegen und sie beschweren. Die Anpressrollen sind in der Regel nicht angetrieben und werden mit der Translationsbewegung der Wickelelemente mitbewegt. Sie sind ebenfalls schwenkbar mit dem benachbarten Wickelelement verbunden.

Eine besonders flache Bauweise der Wickelelemente wird in einer weiteren Ausführungsvariante dadurch erreicht, dass zwei benachbarte Wickelelemente um eine Gelenkachse schwenkbar gelenkig miteinander verbunden sind, und die Wellen normal zur Gelenkachse ausgerichtet und in Richtung der Gelenkachse voneinander beabstandet sind. Dadurch wird ein niedriger Schwerpunkt der Wickelelemente erreicht, sodass diese optimal auf der Folie auflegbar sind und als Beschwerung für die Folie dienen können. Als zusätzliche Abdichtung der Folie können zudem zwischen zwei benachbarten Wickelelementen Anpressrollen drehbar angeordnet sein.

In einer weiteren Ausführungsvariante der erfindungsgemäßen Folienwickeleinrichtung ist vorgesehen, dass die Wickelelemente jeweils ein Gehäuse umfassen, wobei das Gehäuse zumindest zwei jeweils eine Gelenkachse definierende Verbindungsabschnitte zur gelenkigen Verbindung des Gehäuses mit dem Verbindungsabschnitt eines benachbarten Wickelelements aufweist. Durch das vorzugsweise metallische Gehäuse erhalten die Wickelelemente einerseits die notwendige Formstabilität und Steifigkeit, andererseits weist das Gehäuse auf der einem benachbarten Wickelelement zugewandten Seite und auf der dem anderen benachbarten Wickelelement zugewandten Seite jeweils zumindest einen Verbindungsabschnitt auf, an dem das Wickelelement mit dem jeweils benachbarten Wickelelement gelenkig verbunden ist. Die Verbindungsabschnitte können beispielsweise als Konsolen ausgebildet sein, oder von einem durch das Gehäuse verlaufenden Balken, der vorzugsweise normal zur Gelenkachse ausgerichtet ist, ausgebildet sein. Die gelenkige Verbindung an den Verbindungsabschnitten kann beispielsweise über einen, die jeweilige Gelenkachse definierenden Bolzen erreicht werden, der in von den Verbindungsabschnitten ausgebildeten Aufnahmen angeordnet ist.

Um die Reibungsverluste beim Antrieb der Wellen zu minimieren, ist in einer weiteren bevorzugten Ausführungsvariante der Erfindung vorgesehen, dass das Gehäuse jeweils zwei Lagerstellen, vorzugsweise Gleitlager oder Wälzlager, pro Welle aufweist. Die Lagerstellen können überdies auch eine Einrichtung zum Spannen der Umlauffördermittel aufweisen, beispielsweise indem die Lagerstellen in Richtung der Gelenkachse in variierbarem Abstand zueinander fixierbar sind.

Eine besonders bevorzugte Ausführungsvariante der Erfindung sieht vor, dass die Folienwickeleinrichtung zumindest zwei, jeweils eine Mehrzahl von Wickelelementen umfassende Segmente aufweist, wobei die Wickelelemente eines Segments über Gelenkkupplungen miteinander verbunden sind und jedes Segment über einen separaten Antrieb antreibbar ist. Diese Ausführungsvariante bietet mehrere Vorteile: Da die einzelnen Segmente untereinander zwar gelenkig verbunden sind, aber jedes Segment über einen eigenen Antrieb antreibbar ist, kann ein gleichmäßiges Aufrollen der Folie erreicht werden, da die Wickelelemente der Segmente jeweils unterschiedlich antreibbar sind, und insbesondere mit jeweils unterschiedlichen Drehzahlen antreibbar sind. So kann ein schiefes Aufwickeln der Folie verhindert oder korrigiert werden, indem - entweder geregelt oder manuell - die Drehzahl der einzelnen Segmente aufeinander angepasst wird. Es ist auch denkbar, eines der Segmente stillstehen zu lassen und nur das andere bzw. die anderen Segmente zu betreiben, um eine beginnende schiefe Aufwicklung zu berichtigen. Zusätzlich dazu kann die Anzahl der Antriebe bzw. Antriebseinheiten reduziert werden, da in der Regel pro Segment nur ein Antrieb vorgesehen ist. Vorzugsweise besteht die Folienwickeleinrichtung aus zwei Segmenten, welche jeweils zwischen einem Drittel und zwei Drittel, insbesondere die Hälfte, der Quererstreckung des Fahrsilos überdecken.

Die eingangs gestellte Aufgabe wird auch durch einen Fahrsilo zur Aufnahme und Vergärung von Futtermittel umfassend eine befahrbare Rinne für das Futtermittel sowie eine Folie, vorzugsweise eine Siloabdeckfolie, zur Abdeckung des Futtermittels mit einer erfindungsgemäßen Folienwickeleinrichtung gelöst. Wenn die Folienwickeleinrichtung auf der Folie aufliegt und die Folie vorzugsweise einmal um die Wickelelemente umgeschlagen ist, wird die Folie beim Betrieb der Folienwickeleinrichtung mittels der Wickelelemente aufgerollt. Dadurch lässt sich einerseits der freiliegende Abschnitt des Futtermittels genau steuern, da jeweils nur ein kleiner Abschnitt freigelegt werden muss. Gleichzeitig ist es auch möglich die Folienwickeleinrichtung mit umgekehrtem Drehsinn zu betreiben und die Folie wieder abzuwickeln, um den freiliegenden Abschnitt des Futtermittels wieder abzudecken. Durch die Folienwickeleinrichtung ist also, nach der einmaligen Installation, ein Aufwickeln und Abwickeln der Folie durch nur eine Person möglich, wodurch der Arbeitsaufwand beim Austragen von Futtermittel aus dem Fahrsilo erheblich gesenkt wird.

Zur besseren seitlichen Abdichtung der Folie und der Fahrrinne kann ferner eine Folienrandabdichtung an den Oberseiten der Rinne mit jeweils einer nach oben offenen Nut und einem flexiblen Strang vorgesehen sein, wobei die Folienränder durch die Nut geführt und mittels des klemmend in der Nut einliegenden Strangs in der Nut gehalten sind.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: einen Fahrsilo mit einer erfindungsgemäßen Folienwickeleinrichtung;
- Fig. 2: einen Teilschnitt durch drei benachbarte Wickelelemente der Folienwickeleinrichtung;
- Fig. 3: eine dreidimensionale Darstellung eines Wickelelements;
- Fig. 4: eine Seitenansicht des Wickelelements in einer Betriebsposition;
- Fig. 5: eine Aufsicht der Folienwickeleinrichtung;
- Fig. 6: eine Seitenansicht der Folienwickeleinrichtung;
- Fig. 7: eine perspektivische Ansicht einer weiteren Ausführungsform der Folienwickeleinrichtung;
- Fig. 8: die Ausführungsform gemäß der Fig. 7 von oben gesehen;
- Fig. 9: eine Seitenansicht eines Wickelelements gemäß der Ausführungsform der Fig. 7.

### WEGE ZUR AUSFÜHRUNG DER ERFINDUNG

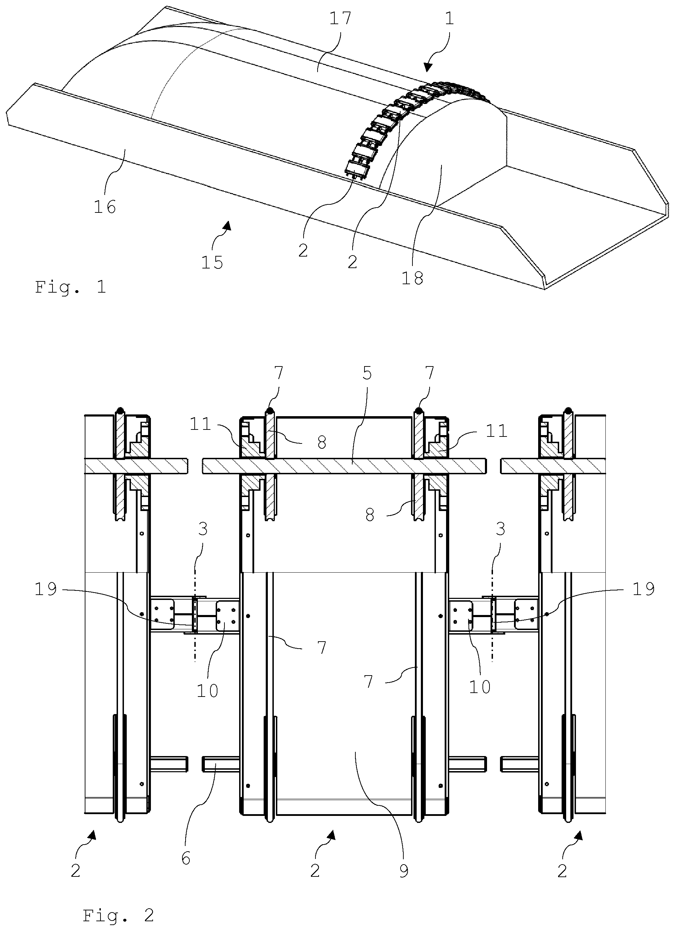

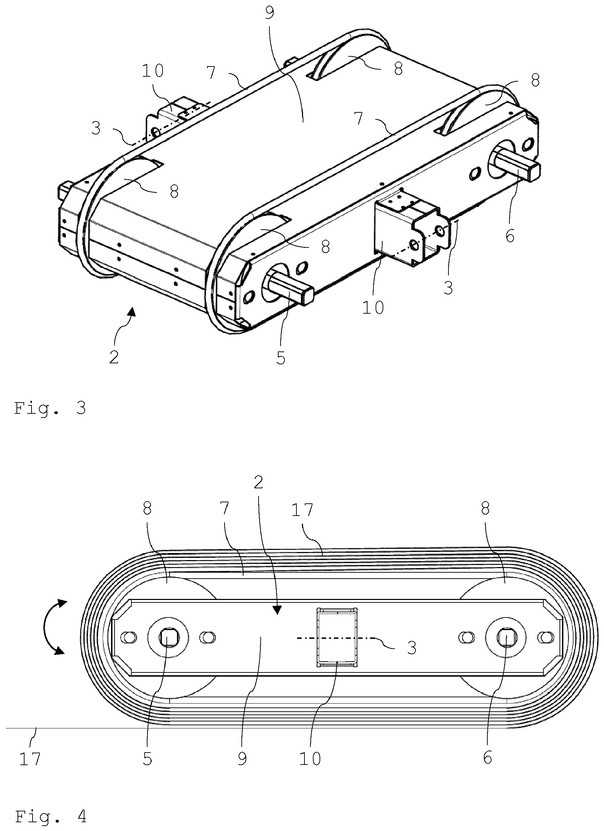

Figur 1 zeigt einen Fahrsilo 15 mit einer darauf angeordneten erfindungsgemäßen Folienwickeleinrichtung 1. Der Fahrsilo 15 besteht aus einer befahrbaren Rinne 16, die beispielsweise aus Beton gegossen ist, die eine Bodenplatte des Fahrsilos 15 ausbildet und zwei Seitenwände zum Halten von Futtermittel 18 aufweist. Im Fahrsilo 15 ist Futtermittel 18, beispielsweise Grünfuttermittel, aufgeschüttet, welches im Fahrsilo 15 gelagert und durch Vergärung konserviert werden soll. Um das Futtermittel 18 vor Witterungseinflüssen zu schützen und luftdicht zu verschließen, sodass das Futtermittel 18 vergären kann, ist das Futtermittel 18 durch eine als Abdeckfolie ausgebildete Folie 17 abgedeckt. Da das Futtermittel 18 in Form eines durch die Seitenwände begrenzten Schüttkegels im Fahrsilo 15 aufgeschüttet ist, ist auch die darauf aufliegende Folie 17 uneben und zumeist bogenförmig ausgewölbt. Auf der in der Abbildung vorderen Seite des Fahrsilos 15 ist bereits ein Teil des Futtermittels 18 ausgetragen worden, wozu die Folie 17 zum Teil aufgerollt ist, sodass das darunter liegende Futtermittel 18 freigelegt ist. Die bereits aufgewickelte Folie 17 (siehe Fig. 4) ist in Figur 1 nicht dargestellt, da diese die Folienwickeleinrichtung 1 verdecken würde.

Um die Folie 17 aufzurollen ist die erfindungsgemäße Folienwickeleinrichtung 1 vorgesehen, welche eine Mehrzahl an antreibbaren Wickelelementen 2 umfasst, wobei der Übersichtlichkeit halber nur zwei Wickelelemente 2 mit dem entsprechenden Bezugszeichen gekennzeichnet sind. Die Wickelelemente 2 sind, wie in der Folge beschrieben, gelenkig miteinander verbunden, sodass sich die Folienwickeleinrichtung 1 nach Art einer Gelenkkette dem Umriss des aufgeschütteten Futtermittels 18 bzw. der das Futtermittel 18 abdeckenden Folie 17 anpasst. Somit ist die Folienwickeleinrichtung 1 im vorliegenden Ausführungsbeispiel bogenförmig über die Folie 17 gelegt und dient neben dem Aufrollen der Folie 17 auch zur Beschwerung der Folie 17, um ein, beispielsweise durch Wind verursachtes, Abheben der Folie 17 zu verhindern und das Eindringen von Feuchtigkeit zu unterbinden.

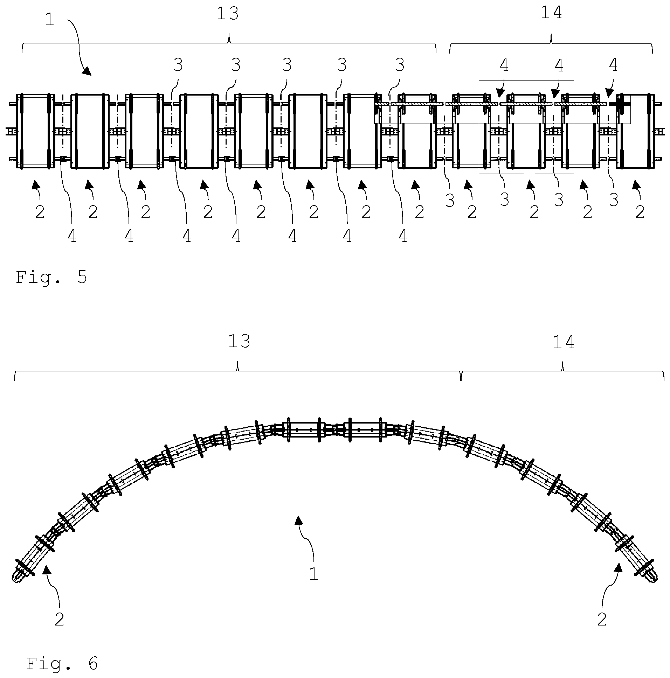

In Figur 2 ist nun eine Ausführungsform eines Wickelelements 2 und ein Teil der beiden dazu benachbarten Wickelelemente 2 abgebildet. Die oben erwähnte gelenkige Verbindung wird dabei dadurch erreicht, dass zwei benachbarte Wickelelemente 2 um eine Gelenkachse 3 schwenkbar aneinander angebunden sind, und dass alle Gelenkachsen 3 parallel zueinander ausgerichtet sind (siehe Fig. 5 und 6). Der Aufbau der Wickelelemente 2 wird nun anhand der vorliegenden Abbildung repräsentativ für alle Wickelelemente 2 erläutert.

Das Wickelelement 2 umfasst ein Gehäuse 9, in welchem eine erste Welle 5 und eine zweite Welle 6 gelagert sind. Die Lagerung im Gehäuse 9 erfolgt über jeweils zwei, im vorliegenden Beispiel als Gleitlager ausgeführte, Lagerstellen 11. Beide Wellen 5,6 sind normal zu den Gelenkachsen 3 und in Richtung der Längserstreckung der Aneinanderreihung der Wickelelemente 2 ausgerichtet und in Richtung der Gelenkachsen 3 voneinander beabstandet. Die erste Welle 5 ist im vorliegenden Fall als Antriebswelle ausgebildet (siehe Beschreibung der Figuren 5 und 6), auf welche ein Antriebsmoment einwirkt. Auf der Antriebswelle 5 sowie auf der zweiten, antriebslosen Welle 6 sind jeweils zwei als Riemenscheiben ausgebildete Treibelemente 8 angebracht. Zwischen jeweils einem auf der Antriebswelle 5 und einem auf der zweiten Welle 6 angebrachten Treibelement 8 verläuft jeweils ein Umlauffördermittel 7 in Form eines Riemens. Die beiden Treibelemente 8 einer Welle 5,6 sind dabei normal zur Richtung der Gelenkachsen 3 voneinander beabstandet und somit jeweils im Randbereich des Gehäuses 9 angeordnet.

Im vorliegenden Ausführungsbeispiel weist das Gehäuse 9 des Wickelements 2 auf den beiden den benachbarten Wickelelemente 2 zugewandten Seiten jeweils einen die Gelenkachse 3 definierenden Verbindungsabschnitt 10 auf. Die Verbindungsabschnitte 10 sind dabei gelenkig mit dem jeweiligen Verbindungsabschnitt 10 des benachbarten Wickelements 2 über einen Bolzen 19 verbunden. Zu diesem Zweck weisen die Verbindungsabschnitte 10, wie in Figur 4 zu erkennen ist, zwei Bohrungen zur Aufnahme des Bolzens 19 auf. Die Verbindungsabschnitte 10 können beispielsweise als an den Seitenwänden des Gehäuses 9 befestigte Konsolen ausgebildet sein. Im vorliegenden Fall sind die Verbindungsabschnitte 10 durch einen durch das Gehäuse 9 geführten Querträger mit rechteckigem Profil ausgebildet, der endseitig die Verbindungsabschnitte 10 aufweist und über Konsolen mit dem Gehäuse 9 verbunden ist.

Wird die Antriebswelle 5 mit einem Antriebsmoment beaufschlagt, so laufen die beiden Umlauffördermittel 7 endlos um und wickeln so die Folie 17, auf der das Wickelelement 2 aufliegt, auf (siehe Fig. 4).

Es versteht sich von selbst, dass in alternativen Ausführungsvarianten die Anzahl der Umlauffördermittel 7 variieren kann, beispielsweise kann ein einzelnes Umlauffördermittel 7 vorgesehen sein oder es können auch drei, vier oder mehr Umlauffördermittel 7 pro Wickelelement 2 vorgesehen sein. Auch die Gestaltung der Umlauffördermittel 7 ist frei wählbar, sodass auch Gurte, Keilriemen, Zahnriemen oder Ketten denkbar sind. Die Ausführung der Treibelemente 8 ist auf die Umlauffördermittel 7 angepasst, sodass diese beispielsweise als Zahnräder, Kettenräder oder Keilriemenscheiben ausgebildet sein können.

In Figur 3 ist das Wickelelement 2 zum besseren Verständnis als dreidimensionale Abbildung dargestellt. Dabei ist klar zu erkennen, dass das Gehäuse 9 das Wickelelement 2 auf allen Seiten abschließt und vier schlitzartige Ausnehmungen zur Aufnahme der Treibelemente 8 aufweist. Die beiden Umlauffördermittel 7 überragen das Gehäuse 9, wie auch in Figur 4 deutlich zu erkennen ist. Durch die Beabstandung der beiden Wellen 5,6 voneinander und eine geeignete Wahl des Durchmessers der Treibelemente 8 ist eine besonders flache Bauweise der Wickelelemente 2 möglich, sodass der Schwerpunkt tief liegt.

Figur 4 zeigt das Wickelelement 2 in einer Betriebsposition, in der bereits ein Abschnitt der Folie 17 auf dem Wickelelement 2 aufgewickelt ist. Durch die durch den Doppelpfeil angedeutete Rotation der Antriebswelle 5 in einem Drehsinn, in der Abbildung entgegen dem Uhrzeigersinn, wird die Folie 17 lagenweise auf die Wickelelemente 2 aufgewickelt, sodass das unter der Folie 17 liegende Futtermittel 18 freigelegt wird und aus dem Fahrsilo 15 ausgetragen werden kann. Wird die Antriebswelle 5 jedoch mit einem Antriebsmoment im umgekehrten Drehsinn, im vorliegenden Fall also im Uhrzeigersinn, beaufschlagt, so kann die aufgewickelte Folie 17 in einfacher Art und Weise wieder abgewickelt werden. Bei der Installation der Folienwickeleinrichtung 1 wird in der Regel ein Abschnitt der Folie 17 über die Wickeleinrichtungen 2 umgeschlagen. Wird die Folienwickeleinrichtung 1 sodann in Betrieb genommen, spannt sich durch die Rotation der Umlauffördermittel 7 zuerst die umgeschlagene Folie 17, solange bis die nötige Spannung erreicht ist und die freiliegende Folie 17 aufgerollt wird. Da es sich bei der Folie 17 zumeist um eine Kunststofffolie handelt, können aufgrund des Reibschlusses zwischen Umlauffördermittel 7 und Folie 17 besonders gute Ergebnisse erzielt werden, wenn auch die Umlauffördermittel 7 aus Kunststoff hergestellt sind. Auch zu erkennen ist eine Spanneinrichtung zum Spannen der Umlauffördermittel 7, die durch zwei Langlöcher ausgebildet ist. Durch die beiden Langlöcher ist der Abstand der Lagerstellen 11 in Richtung der Gelenkachsen 3 einstellbar, sodass die Umlauffördermittel 7 durch Vergrößerung des Abstands spannbar sind.

Die Abbildung in Figur 5 zeigt die Folienwickeleinrichtung 1 mit 12 Wickelelementen 2 in einer eben ausgelegten Position.

Dabei sind deutlich die einzelnen Gelenkachsen 3 zu erkennen, um die jeweils zwei benachbarte Wickelelemente 2 schwenkbar miteinander verbunden sind. Während es grundsätzlich denkbar wäre, jedes der Wickelelemente 2 mit einem eigenen Antrieb zu versehen, ist es aufgrund der damit verbundenen Kosten günstiger, nur eine oder zwei Antriebe vorzusehen und die Wickelelemente 2 untereinander mit Gelenkkupplungen 4 zu verbinden, mittels derer das Antriebsmoment weitergeleitet wird. In alternativen Ausführungsvarianten kann die Anzahl an aneinander gelenkig angebundenen Wickelelementen 2 beliebig variiert und auf die Breite der Rinne 16 angepasst werden.

Im vorliegenden Ausführungsbeispiel sind zwei separate (nicht dargestellte) Antriebe, beispielsweise Elektromotoren, vorgesehen, die das Antriebsmoment auf die, in der Abbildung unteren, Antriebswellen 5 ausübt. Dazu ist der erste Antrieb mit der Antriebswelle 5 des äußerst linken Wickelelements 2 gekoppelt. Um das Antriebsmoment an die Antriebswellen 5 des benachbarten Wickelelements 2 übertragen zu können, sind die Antriebswellen 5 der beiden Wickelelemente 2 über eine Gelenkkupplung 4 miteinander verbunden. Im vorliegenden Ausführungsbeispiel sind die ersten acht Wickelelemente 2 über Gelenkkupplungen 4 miteinander gekoppelt und über einen gemeinsamen Antrieb antreibbar. Mit anderen Worten bilden die gemeinsam angetriebenen Wickelelemente 2 ein erstes Segment 13 aus.

Der zweite Antrieb ist mit der Antriebswelle 5 des äußerst rechten Wickelelements 2 gekoppelt, wobei hier die in der Abbildung oberen Wellen die Antriebswellen 5 darstellen. Die die Antriebswellen 5 verbindenden Gelenkkupplungen 4 sind aufgrund des Teilschnitts nicht erkennbar. Somit sind die hinteren vier Wickelelemente 2 miteinander gekoppelt und bilden ein zweites Segment 14 aus. Es ist auch denkbar, dass der erste Antrieb im Gehäuse 9 eines der Wickelelemente 2 des ersten Segments 13 und/oder der zweite Antrieb im Gehäuse 9 eines der Wickelelemente 2 des zweiten Segments 14 untergebracht ist. Die entsprechende Antriebswelle 5 kann dabei über ein Getriebe mit dem jeweiligen Antrieb gekoppelt sein.

Die beiden Segmente 13,14 können mit unterschiedlichen Drehzahlen bzw. separat voneinander betrieben werden, sodass einem schiefen Aufwickeln der Folie 17 durch den Benutzer entgegengewirkt werden kann. Vorzugsweise sind die Antriebe mittels einer kabellosen Bedieneinheit aktivierbar bzw. deaktivierbar. In alternativen Ausführungsvarianten können auch mehr als zwei Segmente vorgesehen sein. Es ist auch denkbar, dass alle Wickelelemente 2 miteinander gekoppelt über einen gemeinsamen Antrieb antreibbar sind, oder dass einzelne Wickelelemente 2, insbesondere die in der Mitte der Folienwickeleinrichtung 1 angeordneten Wickelelemente 2, antriebslos mitlaufen.

Schließlich zeigt Figur 6 noch eine Ansicht der Folienwickeleinrichtung 1 in dem in Figur 1 dargestellten Betriebszustand. Die Wickelelemente 2, der Übersichtlichkeit halber sind nur die äußersten beiden mit Bezugszeichen versehen, sind gegeneinander um die jeweiligen Gelenksachsen 3 (siehe Figur 5) verschwenkt, sodass die Folienwickeleinrichtung 1 die Form eines Bogens ausbildet. Durch die gelenkige Verbindung der Wickelelemente 2 untereinander kann sich die Folienwickeleinrichtung 1 einer beliebigen Form anpassen. Somit ist die Folie 17 des Fahrsilos 15 unabhängig von der Höhe und der Form des aufgeschütteten Futtermittels 18 effizient und sicher durch die Folienwickeleinrichtung 1 aufwickelbar.

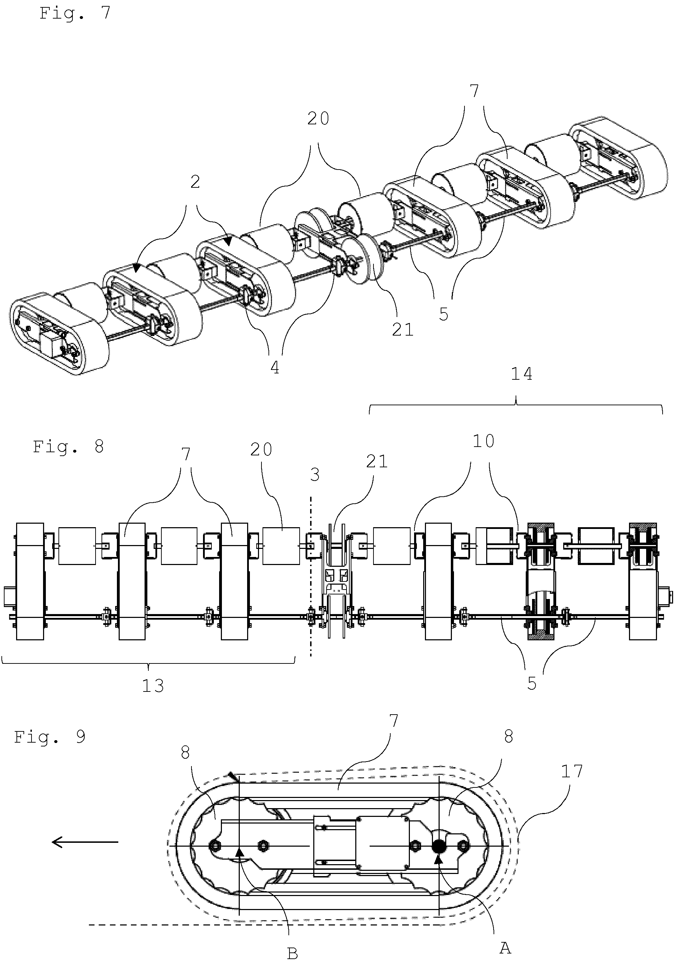

Die Fig. 7 zeigt eine perspektivische Ansicht einer weiteren Ausführungsform der Folienwickeleinrichtung, bei der die Wickelelemente 2 jeweils ein als raupenartiges Band ausgeführtes Umlauffördermittel 7 aufweisen. Zudem weist jedes Wickelelement 2 eine Anpressrolle 20 auf, über die sie mit dem benachbarten Wickelelement 20 verbunden ist. Die Anpressrollen 20 können sich in der gezeigten Ausführungsform in ihrer Höhenlage relativ zu den Wickelelementen 2 geringfügig bewegen, sodass sie in Gebrauchslage auf der Folie 17 aufliegen und sie beschweren. Die Anpressrollen 20 sind nicht angetrieben und werden mit der Translationsbewegung der Wickelelemente 2 mitbewegt. Sie sind ferner um die Gelenkachse 3 mit dem benachbarten Wickelelement 2 verbunden.

Im Ausführungsbeispiel der Fig. 7 und 8 sind zwei separate (nicht dargestellte) Antriebe, beispielsweise Elektromotoren, vorgesehen, die das Antriebsmoment auf die in der Fig. 7 vorderen Antriebswellen 5 ausübt. Dazu ist der erste Antrieb mit der Antriebswelle 5 des äußerst linken Wickelelements 2 gekoppelt. Um das Antriebsmoment an die Antriebswellen 5 des benachbarten Wickelelements 2 übertragen zu können, sind die Antriebswellen 5 der beiden Wickelelemente 2 wiederum über eine Gelenkkupplung 4 miteinander verbunden. Im Ausführungsbeispiel der Fig. 7 und 8 sind jeweils drei Wickelelemente 2 über Gelenkkupplungen 4 miteinander gekoppelt und über einen gemeinsamen Antrieb antreibbar, die ein erstes Segment 13 und ein zweites Segment 14 bilden. Die beiden Segmente 13, 14 sind dabei über ein Verbindungselement 21 verbunden, das die jeweiligen Antriebswellen 5 der beiden Segmente 13, 14 entkoppelt.

Die Fig. 8 zeigt ein Wickelelement 2 von der Seite gesehen. Das Wickelelement 2 wickelt die Folie 17 mithilfe des als raupenartiges Band ausgeführten Umlauffördermittels 7 auf, das von den Treibelementen 8 angetrieben wird. Dabei ruht das Wickelelement 2 zunächst noch, bis die Folie so stark angepresst wird, dass sich das Wickelelement 2 senkrecht zu den Wellenachsen A, B in die in der Fig. 8 eingezeichnete Pfeilrichtung bewegt. Der Antrieb für den Wickelvorgang wickelt somit nicht nur die Folie 17 auf, sondern bewegt die Folienwickeleinrichtung auch senkrecht zu ihrer Längserstreckung weiter. Über eine Funkfernbedienung beispielsweise kann die Bedienperson somit je nach Betätigungsdauer des zumindest einen Antriebes gewünschte Abschnitte des Futtermittels freilegen, indem die Folienwickeleinrichtung entlang dieses Abschnittes bewegt wird und dabei die Folie aufwickelt.

Ein weitgehend luftdichter seitlicher Abschluss der Folie 17 in der Rinne 16 erfolgt etwa in der Art, dass an der Oberseite der Seitenwände der Rinne 16 eine nach oben offene Längsnut, beispielsweise in Form eines eingebetteten oder aufgesetzten Längsprofils gegeben ist und Randabschnitte der Folie 17 seitlich über diese Längsnuten hinaus ragen und durch einen flexiblen Strang, vorzugsweise einen Schlauch, in den Längsnuten klemmend in den Längsnuten gehalten sind. Ein als Schlauch ausgebildeter Strang kann vorteilhafterweise nach dem Einbringen in die Nut mit Druckluft beaufschlagt werden, um die Haltekraft zu erhöhen. Mit Beginn der schrittweisen Entnahme von Futtermittel 18 kann der Überdruck im Schlauch aufgehoben werden. Die Einklemmung der Randabschnitte der Folie 17 sorgt somit für eine zuverlässige Abdichtung des Futtermittels 18 durch die Folie 17.

### BEZUGSZEICHENLISTE

- 1: Folienwickeleinrichtung
- 2: Wickelelement
- 3: Gelenkachse
- 4: Gelenkkupplung
- 5: erste Welle
- 6: zweite Welle
- 7: Umlauffördermittel
- 8: Treibelement
- 9: Gehäuse
- 10: Verbindungsabschnitt
- 11: Lagerstelle
- 12: Spanneinrichtung
- 13: erstes Segment
- 14: zweites Segment
- 15: Fahrsilo
- 16: Rinne
- 17: Folie
- 18: Futtermittel
- 19: Bolzen
- 20: Anpressrolle
- 21: Verbindungselement

## Patentansprüche

1. Folienwickeleinrichtung (1) für einen Fahrsilo (15) zum Aufwickeln einer Folie (17), vorzugsweise einer Siloabdeckfolie, **dadurch gekennzeichnet, dass** eine Mehrzahl von in einer Längsrichtung angeordneten Wickelelementen (2) mit zumindest einem Antrieb für den Wickelvorgang vorgesehen ist, wobei jeweils zwei benachbarte Wickelelemente (2) schwenkbar gelenkig miteinander verbunden sind.

2. Folienwickeleinrichtung (1) nach Anspruch 1, **dadurch gekennzeichnet, dass** zumindest zwei benachbarte Wickelelemente (2) über jeweils eine Gelenkkupplung (4) zur Weiterleitung eines Antriebsmoments miteinander verbunden sind.

3. Folienwickeleinrichtung (1) nach Anspruch 1 oder 2, **dadurch gekennzeichnet, dass** die Wickelemente (2) jeweils zumindest ein um zumindest zwei Wellenachsen (A, B) umlaufendes Umlauffördermittel (7), vorzugsweise ein Riemen oder ein Band, zum kontinuierlichen Aufwickeln der Folie (17) aufweisen.

4. Folienwickeleinrichtung (1) nach Anspruch 3, **dadurch gekennzeichnet, dass** zumindest zwei Wellen (5, 6) mit den Wellenachsen (A, B) des Umlauffördermittels (7) vorgesehen sind, wobei zumindest eine der Wellen (5,6) als Antriebswelle ausgebildet ist und über eine Gelenkkupplung (4) mit der Antriebswelle eines benachbarten Wickelements (2) verbunden ist.

5. Folienwickeleinrichtung (1) nach Anspruch 3 oder 4, **dadurch gekennzeichnet, dass** zwei benachbarte Wickelelemente (2) um eine Gelenkachse (3) schwenkbar gelenkig miteinander verbunden sind, und die Wellen (5,6) normal zur Gelenkachse (3) ausgerichtet und in Richtung der Gelenkachse (3) voneinander beabstandet sind.

6. Folienwickeleinrichtung (1) nach einem der Ansprüche 1 bis 5, **dadurch gekennzeichnet, dass** zwischen zwei benachbarten Wickelelementen (2) Anpressrollen (20) drehbar angeordnet sind.

7. Folienwickeleinrichtung (1) nach einem der Ansprüche 1 bis 6, **dadurch gekennzeichnet, dass** die Wickelelemente (2) jeweils ein Gehäuse (9) umfassen, wobei das Gehäuse (9) zumindest zwei jeweils eine Gelenksachse (3) definierende Verbindungsabschnitte (10) zur gelenkigen Verbindung des Gehäuses (9) mit dem Verbindungsabschnitt (10) eines benachbarten Wickelelements (2) aufweist.

8. Folienwickeleinrichtung (1) nach Anspruch 7, **dadurch gekennzeichnet, dass** das Gehäuse (10) jeweils zwei Lagerstellen (11), vorzugsweise Gleitlager oder Wälzlager, pro Welle (5,6) aufweist.

9. Folienwickeleinrichtung (1) nach einem der Ansprüche 1 bis 8, **dadurch gekennzeichnet, dass** die Folienwickeleinrichtung (1) zumindest zwei, jeweils eine Mehrzahl von Wickelelementen (2) umfassende Segmente (13,14) aufweist, wobei die Wickelelemente (2) eines Segments (13,14) über Gelenkkupplungen (4) miteinander verbunden sind und jedes Segment (13,14) über einen separaten Antrieb antreibbar ist.

10. Fahrsilo (15) zur Aufnahme und Vergärung von Futtermittel (18), umfassend eine befahrbare Rinne (16) für das Futtermittel (18), sowie eine Folie (17), vorzugsweise eine Siloabdeckfolie, zur Abdeckung des Futtermittels (18) mit einer Folienwickeleinrichtung (1) nach einem der Ansprüche 1 bis 9.

11. Fahrsilo (15) zur Aufnahme und Vergärung von Futtermittel (18) nach Anspruch 10, **dadurch gekennzeichnet, dass** eine Folienrandabdichtung an den Oberseiten der Rinne (16) mit jeweils einer nach oben offenen Nut und einem flexiblen Strang vorgesehen ist, wobei die Folienränder durch die Nut geführt und mittels des klemmend in der Nut einliegenden Strangs in der Nut gehalten sind.
